# EUROPEAN PATENT SPECIFICATION

(11) **EP 3 554 220 B1**
(45) Date of publication and mention of the grant of the patent: **13.04.2022**
(21) Application number: 17811936.8
(22) Date of filing: 07.12.2017
(51) Int. Cl.: A01G 13/02, C09K 17/52

(54) **MULCH COMPOSITION, METHOD OF MANUFACTURING AND RELATED USES**
STREUZUSAMMENSETZUNG, HERSTELLUNGSVERFAHREN UND ENTSPRECHENDE VERWENDUNG
COMPOSITION DE PAILLIS, PROCÉDÉ DE FABRICATION ET UTILISATIONS ASSOCIÉES

(30) Priority: 13.12.2016 FI 20165959
(43) Date of publication of application: 23.10.2019
(73) Proprietor: Luonnonvarakeskus, 00790 Helsinki (FI)
(72) Inventor: KEMPPAINEN, Riitta, 30100 Forssa (FI); TIILIKKALA, Kari, 31610 Vaulammi (FI)
(74) Representative: Heinonen & Co
(86) International application number: PCT/EP2017/081769
(87) International publication number: WO 2018/108681

(56) References cited:
- EP-A1- 1 116 434
- EP-A2- 2 667 701
- US-A1- 2004 194 370

## Description

### FIELD OF THE INVENTION

The present invention generally relates to layered organic ground cover materials, such as mulches, used in cultivation and their production methods. In particular, the present invention concerns a mulch material implemented as a biodegradable fluidic composition, a method for its production and related uses.

### BACKGROUND

Various soil and plant cover materials, generally known as mulches/mulch ground covers, are available to assist cultivation. Use of mulches/mulch ground covers provides for necessary soil warmings, soil moisture regulation, enhanced nutrient management, reduced root pruning and improved plant growth. The mulches can be roughly classified as follows.

Synthetic mulch ground covers are commonly produced of plastic. Each year about 80 000 km² of cultivated lands worldwide are covered by plastic ground cover films, made primarily of black polyethylene. Synthetic plastic materials do not degrade promptly and must be removed after each crop rotation. However, removal thereof from the site is rather problematic, since used ground covers readily break into small pieces. Moreover, used plastic ground covers are not suitable for recycling because loads of dirt and soil stuck thereto. Their efficient disposal via burning is associated with environmental hazards and significant expenses, whereas reclamation via burying, for example, is laborious and long-lasting. Moreover, use of plastic ground cover films does not allow for efficient application of additional fertilizers, as well as prevents uniform moisture distribution upon raining or irrigation, for example. Another common drawback associated with the use of plastic films is uncontrolled entrance and propagation of insects, snails, worms, etc. thereunder.

Biodegradable mulch ground covers, such as paper, carton, fabric, or biodegradable plastic (polylactic acid derived, for example) are also known. These ground covers are, however, generally incapable of maintaining sufficiently high soil temperature thereunder. Paper mulch ground covers tend to break apart easily; therefore cannot be used as efficient weed controls means. Since about 30-40% of crop losses worldwide are caused by uncontrolled weed growth, importance of providing efficient weed control means cannot be underestimated. In most cases the aforementioned ground cover type mulches require puncturing prior to or along with seeding/planting/replantation, that would require additional measures to prevent weed growth in the place of a puncture.

Other solutions include particulate mulches derivable from natural sources, including plant residues, wood products and animal material. Those are particularly suitable for cultivation of so called natural- or organic products, generally known as organic farming; however, efficiency of said nature-derived mulches against uncontrolled weed growth is low.

The aforementioned solutions, although generally usable, are still restricted with two common drawbacks. Apart from the above indicated problems arising from utilization of plastic ground cover films prevailed in at least some crop cultivation regions worldwide, the other major drawback concerns an abundant use of synthetic chemicals along with the mulch materials. Thus, in order to efficiently prevent weed growth in tree- and plant nurseries, only in Finland in 2014 about 1,300 tons of effective agents and about 3,300 tons of ready-to-use mixtures have been sold for agricultural, horticultural and forestry purposes, wherein about a half of total chemicals sold has been glyphosate and the products based thereon. Glyphosate prevents weed growth by binding nutrients indispensable therefor; however, according to recent data, glyphosate exposes cultivated plants prone to fungus. Moreover, the European Commission has recently approved a proposal for banning polyethoxylated tallow amine (POEA), a co-formulant, from all glyphosate-based herbicides, due to its high toxicity. Accordingly, use of glyphosate-based products in at least Europe tends to decrease. However, despite of harmful environmental and health effects the chemical pesticides cause, use thereof in cultivation still remains widespread.

EP 1 116 434 A1 discloses a biodegradable mulch mat applied onto the substrate as aqueous foam and therefore having an open cell structure. The mulch mat is prepared from a foamed aqueous dispersion of fibers (shredded wood, straw, paper, sphagnum moss or peat moss), granules (corn cob, nut hulls, bark) and a binder (polysaccharides, vegetable oil). The mulch mat can further comprise an additional component, such as a surfactant, plant nutrient, fungicide, bactericide, etc. Foaming is achieved by entraining air or gas, such as CO₂, in a dispersion of fibrous- and granular material in an aqueous liquid medium containing additives. When applied onto the substrate, the aqueous foam dries and shrinks at least twice; drying may take 24 hours. In an absence of entrained air and/or granular materials, the mulch mat tends to acquire the properties of paper mache.

US 2004/194370 A1 describes an alternative fluidic mulch composition for example.

In this regard, it would be desirable to update the field of technology related to production of mulches and mulch ground covers in view of reducing health risks associated with the use of synthetic chemicals as pesticides, growth promoters and the like, as well as decreasing compromising effects thereof onto soils and crops. In particular, in view of global climate change and the current warming trend, pronounced growth of weeds and pest insects must be foreseen and prepared to combat with by means other than hazardous chemicals. Need for new, environmentally friendly weed- and pest control substances arises also in city planning and landscaping, e.g. in public green recreation zones, parks and playgrounds. Further advances in development of synthetic plastic-free mulches are also highly looked-for. Moreover, provision of means for facilitating distribution of mulch materials within cultivated areas is still desirable.

### SUMMARY OF THE INVENTION

An objective of the present invention is to at least alleviate each of the problems arising from the limitations and disadvantages of the related art. The objective is achieved by various embodiments of a biodegradable, fluidic mulch composition, a method for manufacturing and uses thereof. Thereby, in one aspect of the invention a fluidic mulch composition is provided, comprising a fibrous peat material, biomass-derived pyrolysis oil and water, according to what is defined in the independent claim 1.

The mulch composition comprises the fibrous peat material in an amount of 50 percent of the total volume occupied by said mulch composition; and biomass-derived pyrolysis oil - in an amount of 2 to 25 percent of the total volume occupied by said mulch composition.

In some embodiment the mulch composition comprises the fibrous peat material, whose moisture content does not exceed 10 percent by weight. In some other embodiment the mulch composition comprises the fibrous peat material pre-saturated with water such, that moisture content thereof is at least 50 percent by weight.

According to the invention the mulch composition comprises biomass-derived pyrolysis oil provided as an unfractionated liquid product obtainable from biomass feedstock by pyrolysis.

In some further embodiment the mulch composition additionally comprises an at least one additive provided as biochar. In still further embodiments, the mulch composition further comprises bio-ash and/or potato flour.

In another aspect of the invention a ground cover is provided as defined in claim 6. The ground cover comprises the mulch composition according to the invention, in a form of a surface cover layer uniformly distributed over the soil substrate.

In another aspect of the invention a method for manufacturing a mulch composition is provided, according to what is defined in the independent claim 7. The method comprises the steps of combining a fibrous peat material with water to obtain an aqueous peat suspension, followed by admixing biomass-derived pyrolysis oil into said suspension.

In some embodiment the method further comprises admixing an at least one additive with a fibrous peat material prior to combining a resulted blend with water, wherein said at least one additive is biochar. In some further embodiment, bio-ash and/or potato flour can be additionally admixed with the fibrous peat material.

In still another aspect use of the mulch composition as a pesticide is provided, according to what is defined in the independent claim 10. In some embodiments the pesticide is selected from the group consisting of: herbicide, fungicide, bactericide, insecticide, insect growth regulator, nematocide, molluscicide, and rodenticide.

In still another aspect use of the mulch composition in soil reclamation and improvement is further provided, according to what is defined in the independent claim 12.

The utility of the present invention arises from a variety of reasons depending on each particular embodiment thereof. At first, the invention generally aims at solving the problem of plastic waste, arising from the used ground cover films commonly made of polyethylene. The mulch composition provided hereby comprises only organic components and is therefore completely biodegradable. It is clear that degradation of organic matter proceeds in significantly shorter time periods in comparison to synthetic materials; therefore the mulch composition according to the present invention can be left on the field after harvesting, thus improving cost-efficiency of the cultivation cycle(s). Since the invention does not rely on petroleum-derived plastic polymers, utilization thereof has no harmful effects onto activity and population of soil microorganisms and does not give rise to environmental damages at cultivation sites.

Secondly, the mulch composition disclosed hereby has been experimentally proven to possess a marked potential as a biocide, in particular, as a pesticide. The mulch composition acts as a natural repellent against pest insects, snails, slugs, etc., harmful microorganisms and, in some instances, against small rodents. Moreover, the invention can be effectively used to combat an uncontrolled weed growth. Repelling effect lasts normally for at least several weeks dependent on raining conditions. Since the mulch composition of the present invention does not contain synthetic chemicals, it is safe to use in public green recreation zones, such as country parks and playgrounds. The mulch composition disclosed hereby further promotes plant and seedlings growth due to pest prevention properties thereof. The mulch composition of the present invention is thus environmentally friendly and biocompatible.

Another important factor to consider, in terms of popular nowadays "organic farming", is an ability of the mulch composition of the present invention to improve resistibility/durability of crops and plants treated thereby against plant diseases, that logically eliminates the need in obtaining transgenic (genetically modified, GM) cultures. The invention thus offers an efficient route for cultivating genetically unmodified plants in reasonable expenses that would make organic farming more competitive in terms of cost-effectiveness.

Furthermore, since the invention does not involve any kind of (plastic, paper etc.) film to cover soil, rain- and irrigation water can freely penetrate therethrough, thus eliminating the need in drip irrigation systems. The invention allows getting rid of various pest insects, snails, etc. that commonly nest under plastic (or any kind of sheet-like) ground cover films. The mulch composition disclosed hereby also possesses excellent (sun)light- and oxygen permeability characteristics.

In addition to aforesaid, the mulch composition of the present invention is provided in a substantially fluidic, liquid-like form. Hence, it is easy to spread within a cultivated area, in particular, within otherwise difficult to reach zones, such as around and/or under individual plants, bushes, seedlings, under perennial plants and berry plants, as well as between the plant rows.

The terms "natural", "organic" and "bio-derived" are utilized in present disclosure to indicate that said mulch composition and components thereof are directly derivable from renewable biomass sources. The term "biocompatible" is used to indicate that said mulch composition has no toxic or hazardous effects on environmental and ecological systems; and the term "biodegradable" is used to indicate that said mulch composition can be completely broken down by micro-organisms found in the environment in a reasonable timeframe.

The term "ground cover" is utilized in present disclosure to indicate a formation established upon the aforesaid mulch composition has been uniformly spread over a soil substrate within a site intended for treatment or at least a part of said site, to form a uniform surface cover layer of a predetermined thickness (depth).

The term "biomass" is utilized in present disclosure with regard to overground vegetation matter available on renewable basis, including products of agriculture and forestry, as well as residues and waste from wood- and paper industries.

The term "pyrolysis oil" is utilized in the present discloser with regard to an unfractionated (crude, unrefined) liquid product obtainable from pyrolysis of biomass feedstock.

Different embodiments of the present invention will become apparent by consideration of the detailed description and an accompanying drawing.

### BRIEF DESCRIPTION OF THE DRAWINGS

Fig. 1 is a cross-sectional view of a soil profile with the mulch composition, according to the present invention, and an enlarged cross-sectional view of said mulch composition, accordingly.
Fig. 2 is a comparative bar chart showing effect of biochar on light transmission through the mulch composition.

### DETAILED DESCRIPTION OF THE DRAWINGS

Detailed embodiments of the present invention are disclosed herein with the reference to an accompanying drawing. Following citations are used for the members:
- 10 -: a mulch composition according to the present invention;
- 11 -: a fibrous peat material;
- 12 -: biomass-derived pyrolysis oil;
- 13 -: an additive;
- 14 -: a layer of the mulch composition 10 dried under ordinary weather conditions;
- 20 -: a soil substrate.

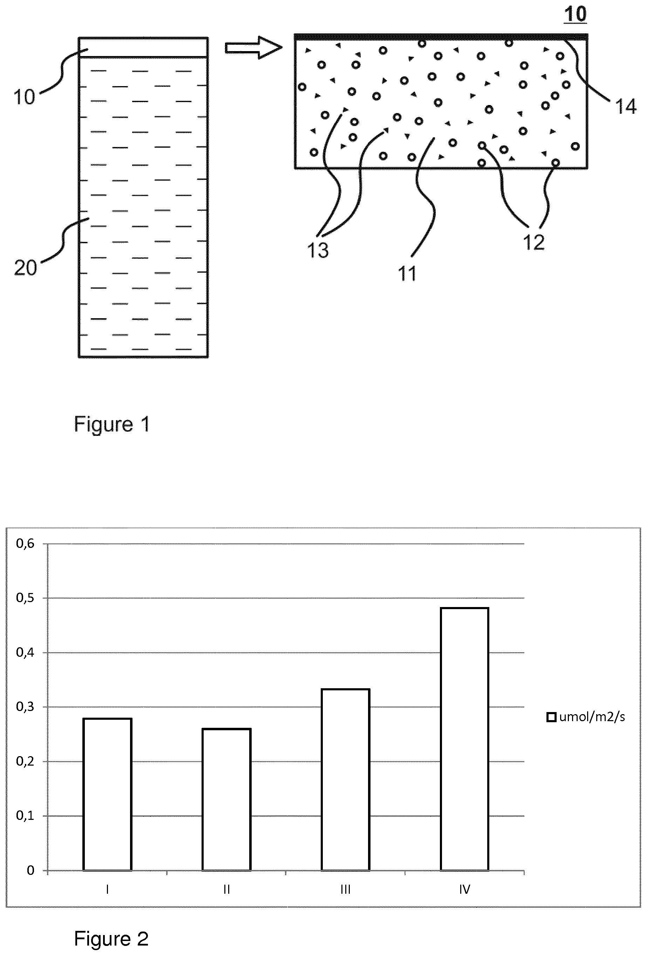

Fig. 1 illustrates at 10 a concept underlying various embodiments of a fluidic mulch composition in accordance with some aspect of the present invention. On its left Fig. 1 shows a cross-sectional view of the mulch composition 10 as being uniformly distributed over a soil substrate 20, such as clay, for example. The mulch composition 10 spread over the soil substrate 20 as shown on Fig. 1 (left) thus forms on said soil substrate 20 a ground cover provided as a surface cover layer of a predetermined thickness (depth). Thickness of said ground cover layer may range within 1-3 cm; preferably constituting approximately 2 cm.

On its right Fig. 1 shows an enlarged cross-sectional view of the mulch composition 10 apart from the soil substrate layer 20.

It is preferred that the fluidic mulch composition 10 is easily spreadable over the soil substrate 20 by means of a hosepipe, for example. It is further preferred that said mulch composition 10 is configured to solidify, upon being distributed over a soil substrate, to form a uniform surface cover layer of a predetermined depth.

The mulch composition 10 comprises a fibrous peat (turf) material 11, water and a liquid product of biomass pyrolysis, referred to in the present disclosure as "pyrolysis oil". On Fig.
1 biomass-derived pyrolysis oil is indicated by the reference numeral 12; water is not shown. While being exposed to ordinary weather condition (e.g. during sunshine) the mulch composition 10 may slightly dry from its surface. Dried surface layer is indicated on Fig. 1 by the reference number 14.

It is advantageous that the mulch composition 10 comprises the fibrous peat material 11 in an amount of approximately 50 percent by volume (vol.-%), expressed hereby as about 50 percent of the total volume occupied by said mulch composition. The fibrous peat material thus forms about a half of a cubic measure of the mulch composition 10, independent on the moisture content within said peat material.

It is generally known that peat (turf) is a complex polydisperse multicomponent system composed of partially decomposed and disintegrated organic matter accumulated in water-saturated areas, such as marshlands and mires, in the absence of oxygen. Peat is thus composed primarily of marshland vegetation, such as trees, grasses and fungi. Moisture content in peat generally ranges within 50-70%, but can reach 90%. Peat lignin generally decomposes slower than cellulose and hemisellulose; therefore, its content even in strongly decomposed peat remains rather high (40-20% dependent on decomposition level of vegetative matter).

It has been shown that peat comprises longer lignocellulosic fibers than other fibrous materials, such as sawdust, for example. Attempts to obtain the mulch composition 10 using sawdust have been unsuccessful, since sawdust fibers were not sufficiently long and therefore incapable of maintaining a stable fibrous structure required for the purposes of the invention.

In some embodiment the mulch composition 10 comprises the fibrous peat material 11 in a substantially dry form, having moisture (such as water) content therein in an amount of less than or equal to 10 wt.%. In some instances amount of moisture in the fibrous peat material can be less than or equal to 5 wt.%. The fibrous peat material 11, according to this embodiment, may be provided in particulate (dried, unprocessed) or powdered (dried and processed by grinding, for example) forms.

In some other embodiment the mulch composition 10 may comprise the fibrous peat material 11 pre-saturated with water, with water content therein being at least 50 wt.-%. It is, however, preferred that water extent in the fibrous peat material 11 does not exceed 80 wt.-%. In some instances "wet" or freshly collected peat can be also utilized as the fibrous peat material 11.

A reference is made to another constituent of the mulch composition 10, viz., to biomass-derived pyrolysis oil 12 (Fig. 1). In accordance to the definition above, the term "biomass" is utilized hereby primarily to indicate lignocellulosic ("green" or plant) biomass, incorporating wood, grass, and other herbaceous material, as well as wood- or paper-derived waste biomass. The main components of lignocellulosic biomass are cellulose, hemicellulose and lignin. For example wood contains about 35-50% of cellulose, 20-30% of hemicellulose and 25-30% of lignin. Other typical components are extractive substances provided as generally smaller organic molecules or polymers, and minerals (inorganic compounds). These are present in varying proportions in different biomass types, which proportions influence product distributions upon pyrolysis.

Pyrolysis is a process of thermal decomposition of organic material in an absence of oxygen. Pyrolysis of biomass normally yields volatile non-condensable gases (H₂, CO, CO₂, CH₄, CₙHₘ), solid (bio)char, and volatile condensable compounds, wherein the latter can condensate to form liquids. On heating to pyrolysis temperatures cellulose and hemicellulose form condensable vapors and gas, whereas lignin decomposes to liquid, gas and solid char products.

Aforesaid (condensable) liquid products are generally referred to as pyrolysis oils, bio-oils or pyrolysis tars. Chemical composition of said pyrolysis oils largely depends on a type of biomass it is produced from; amount of various components therewithin may reach four hundred. Pyrolysis oils can be subjected to further separation / refinement, e.g. by fractional distillation to obtain various distillate fractions.

In an absence of established nomenclature allowing to reliably distinguish the aforesaid products from one another, by the term "pyrolysis oil" we will refer in the present disclosure to a product defined herein below.

The mulch composition 10 thus comprises biomass-derived pyrolysis oil 12 provided as an unfractionated (crude, unrefined) liquid obtainable from pyrolysis of biomass. Pyrolysis oil 12 is a dark brown, tarry, free-flowing organic liquid with low pH value (pH 2-3) and comprised of highly oxygenated compounds. Pyrolysis oil 12 typically contains a considerable amount of lignin-derived compounds that act as natural adhesives to bind fibrous peat material 11, as discussed herein below.

The amount of biomass-derived pyrolysis oil within the mulch composition 10 preferably ranges from 2 to 25 percent by volume (vol.-%), expressed hereby as 2 to 25 percent of the total volume occupied by said mulch composition; in some preferred embodiment amount of pyrolysis oil 12 in the composition 10 may comprise 10-15 vol.-%.

The amount of pyrolysis oil 12 in said mulch composition 10 is generally adjustable dependent on the tolerance capacity of the plant. By the way of an example, pyrolysis oil concentrations expressed as a volumatic fraction of the total volume of the fluidic mulch composition constitute: 3 - 4 % for short-season vegetables (harvested in 1-2 months); 5 - 6% for one-season vegetables and perennial herbs; 7 - 10% for berry crops: and 10 - 15% for multi-season greenspace trees and ornamentals.

By adjusting amounts of pyrolysis oil in the mulch composition 10, physical properties thereof, such as density, viscosity and flowing ability, can be regulated to render said mulch composition 10 particularly suitable for a variety of site-related applications, such as for fruit- and vegetable gardens, fields, parks and forests. For example, viscosity of the mulch composition 10 may be reduced and flowing ability increased, accordingly, whether intended use thereof is a "difficult" site, e.g. under individual plants and bushes, as well as between the plant rows. Also functional properties of the mulch composition 10, such as its biocidal activity, can be regulated in the same manner, as discussed herein below.

It is generally known that the content of a liquid product formed during pyrolysis of biomass is affected by temperature and resident time of the reactions. Pyrolysis processes can be roughly categorized to slow pyrolysis and fast pyrolysis. Fast pyrolysis is characterized by high heating rates (about 1000°C/s), temperatures generally in the range of 450-600°C and short vapor residence time (less than 2 seconds). This generally requires dry and finely grinded feedstock. Slow pyrolysis runs at temperatures within 350-480°C, in some instances, within 400-450°C, has slow heating rates and longer vapor residence times. Slow pyrolysis is also more tolerant to moisture content in feedstock. Slow pyrolysis process attracts special interest, since it appears to have a greater impact on decreasing the rate of climate change due to a higher share of (bio)char produced thereby that can work as a carbon sink and increase agricultural productivity of soils.

For the purposes of the invention it is preferred that pyrolysis oil 12 contained in the mulch composition 10 is produced by slow pyrolysis. Biomass-derived pyrolysis oil 12 obtainable by the methods of slow pyrolysis generally consists of an organic (water-soluble) liquid phase and tars chemically dissolved therein. The reference is made particularly to unfractionated (crude) oil that has not yet undergone any separation or refinement. Pyrolysis oil can be considered a microemulsion in which the continuous phase is an aqueous solution of cellulose and hemicellulose decomposition products and small molecules from lignin decomposition. The continuous liquid phase stabilizes a discontinuous phase that is largely composed of pyrolytic lignin macromolecules. The latter is largely referred to as "tar" and can be settled down by simply storing during several weeks. The main compounds of the water-soluble liquid phase are water and organic components, such as acetic acid, methanol, hydroxypropanone, furfural and acetone. Other organic compounds of the liquid phase include, but are not limited to the other carboxylic acids, e.g. formic acid; syringol, guaiacol, catechol, and phenol derivatives; benzenes; heterocyclic organic compounds, such as furans and pyrans; sugar-like compounds, e.g. 1,6-anhydro-β-D-glucopyranose; and polycyclic aromatic hydrocarbons (PAHs). Tars, in turn, primarily consist of PAH compounds and high molecular lignin-based substances, the latter constituting 50-60 wt.-% of the tar(s).

Pyrolysis oils are hydrophilic in nature and contain about 15-25 wt.-% of water as an integral part of a chemical solution.

In one preferred embodiment wood feedstock is utilized for obtaining said pyrolysis oil 12. By the term "wood feedstock" we primarily refer to the products of forestry and wood waste. Characteristics of wood pyrolysis products are dependent on whether a hardwood or softwood species are pyrolyzed. In the present disclosure a reference is made to broadleaf trees to identify the term "hardwood"; and to coniferous trees - to identify the term "softwood", accordingly.

In still preferred embodiment hardwood-derived biomass is utilized as a feedstock. Exemplary hardwood tree species include that of genus *Betula* (birch), such as *B. pendula* (Silver birch), *B. pubescens* (Downy birch); genus *Salix* (willow), such as *S. caprea* (Goat willow), *S. borealis* (Boreal willow), *S. pentandra* (Bay-leaf willow); genus *Acer* (maple), such as *A. platanoides* (Norway maple); genus *Ulmus* (elm), such as *U. glabra* (Wych elm), *U. laevis* (European white elm); genus *Quercus* (oak), such as *Q. robur* (Common oak), and the like. Birch and willow trees are particularly preferred.

Hardwood and softwood species vary in lignin composition. Thus, in contrast to softwood lignin primarily composed of guaiacyl-type lignin, hardwood lignin consists of syringyl and guaiacyl units. For the purposes of the invention hardwood lignin is preferred, as it tends to give less condensed structures after pyrolysis than softwood lignins. Additionally, hardwood lignins contain more methoxyl groups than softwood lignins, whose presence helps to release more phenolic compounds, methanol and methane from hardwood lignin than softwood lignin in thermochemical processes. Aforementioned compounds have potential pesticide activity and can be effectively exploited for the purposes of the present invention. Furthermore, as lignin is generally accepted as "glue" that binds different components of lignocellulosic biomass together, also the products of pyrolytic lignin decomposition, contained within pyrolysis oil 12, act as a natural binder for fibrous peat material 11 forming the mulch composition 10 of the present invention (Fig. 1).

In some embodiment the mulch composition 10 further comprises an at least one additive 13 (Fig. 1). The additive 13 is preferably provided as biomass-derived biochar. Additionally, biomass-derived bio-ash and/or potato flour can be used as additives. In some preferred embodiment the biomass-derived biochar and bio-ash are wood-derived. Said additive 13 is preferably provided as a fine ground particulate or a powder. Content of the additive 13 in the mulch composition 10 may vary within a range of 1-2 wt.-%.

By the term "biochar" we refer in present disclosure to a solid product of biomass pyrolysis. As disclosed above biochar is formed primarily from the thermochemical conversion of lignocellulosic material, in particular, lignin. Char, or biochar, is composed mainly of carbon (75-85 vol.-%).

Biomass also contains a small mineral content that is converted, upon pyrolysis, into the pyrolysis ash. Said pyrolysis ash is further referred to as "bio-ash".

A reference is made to Fig. 2 showing a comparative chart that demonstrates the effect of biochar on light transmission through the mulch composition. The legend for the bar chart shown on Fig. 2 is presented in the Table 1 below.

**Table 1. Effect of biochar on light penetrability of mulch compositions.**

| | Mulch composition | Light, umol / m² / s |
|---|---|---|
| I | Peat + biochar | 0,2784 |
| II | Peat + biochar + pyrolysis oil | 0,2594 |
| III | Peat + pyrolysis oil | 0,3325 |
| IV | Peat | 0,4814 |

Effect of biochar on ability of the mulch composition to transmit light therethrough (light penetrability) has been investigated. Results were recorded performed at an incident photosynthetic photon flux density (PPFD) of 186 umol / m² / s that shows an amount of active photons (measured in micromoles) arrived into a square meter (m²) each second. All samples were dry mulch constituting a 5 mm thick layer. All samples (I-IV) contain water.

In all mulch compositions tested so far amount of transmitted (penetrated) light constituted less than 0,2% with regard to incident light; whereas for efficient weed control it is sufficient that a mulch / a ground cover transmits through about 5 % of incident light. However, from the results above it is evident that presence of biochar reduces ability of the much composition (sample II) to transmit light therethrough. Thus, amount of light that penetrates through the biochar-containing mulch composition 10 (sample II) has been reduced by 40 percent in comparison to the control sample containing no biochar (sample IV). Biochar further imparts black color to mulches / ground covers, thus enhancing soil-warming capacity thereof, as in comparison with brown- or brownish peat-based mulches, for example.

Upon provision of the mulch composition 10 with deprived light permeability due to addition of biochar therein the following benefits can be attained: improved thermal storage capacity (soil-warming capacity) in the soil surface layer due to addition of a black color to the mulch composition; improved weed control due to decreased light penetration through the mulch composition layer; improved soil water holding / retention capacity; improved soil fertility due to enhanced carbon uptake and sequestration, as well as due to addition of soil organic matter (SOM) content; and absorption of noxious chemicals.

The mulch composition 10 provided hereby is completely biodegradable under conventional environmental conditions. (Bio)degradation occurs in at least several weeks from application of said composition 10 onto soil and at the latest - at the end of the cultivation season. Provision of the mulch composition 10 is therefore such to enable complete integration thereof with any kind of ecosystem, thus allowing for sustainable agriculture and forestry in an improved, in terms of efficiency and biocompatibility, manner.

In another aspect of the invention, a method for producing the mulch composition 10 is provided, said method comprising at least: combining a fibrous peat material 11 with water to obtain an aqueous peat suspension, followed by admixing biomass-derived pyrolysis oil 12 into said suspension. In some embodiment the method comprises an additional step of admixing an additive 13, preferably provided as biochar, with a fibrous peat material 11, prior to combining a resulted blend with water. The method allows for producing a substantially liquid mulch composition 10 that is easily spreadable over the soil substrate 20 by means of a garden hose, for example.

It is preferred that the dry components, viz. the fibrous peat material 11 and the at least one additive 13, are pre-combined prior to admixing water thereto. For the purposes of the invention the term "dry" is utilized hereby to indicate substantially moistureless, particulate or powdered material, in which moisture content is at most 10 wt.%, in some instances, at most 5 wt.-%.

It is further preferred that pyrolysis oil 12 is added after water has been admixed with the fibrous peat material 11 and, optionally, additive(s) 13. In one particular example, dry fibrous peat material 11, according to some embodiment, has been admixed with finely ground (dry) additive 13, such as biochar, and water has been added to a resulting dry blend to obtain an aqueous suspension. Preparation of the mulch composition 10 has been completed by further admixing of pyrolysis oil 12 into said aqueous suspension.

Admixing of pyrolysis oil 12 into the aqueous peat suspension thus constitutes a very last stage of the production method. The mulch composition 10 can be prepared beforehand and transferred to a cultivation site as a ready-made composition. Alternatively, pyrolysis oil 12 can be added into the aqueous peat suspension immediately on-site, prior to distribution of the mulch composition 10 over the site intended for treatment.

Fibrous peat materials 11 pre-saturated with water and/or freshly collected, according to some embodiments, are first admixed with water followed by addition of pyrolysis oil 12, in accordance with the method disclosed above.

Upon admixing of pyrolysis oil 12 into the aqueous peat suspension followed by spreading the resulted mulch composition 10 onto a cultivated site, at least partial gelation of the mulch composition 10 occurs, because pyrolysis oil 12 acts as glue that binds peat fibers and, optionally, biochar or the other additive(s) 13 to form a stable mass. Gelation / coagulation of the mulch composition 10 occurs within several minutes after application thereof onto soil.

The above described effect is due to the fact that the discontinuous phase (tar) contained in pyrolysis oil 12 tends to solidify and precipitate upon admixing said pyrolysis oil with water. Thus, pyrolysis oil simply admixed with water in a bowl, for example, will promptly solidify to form a precipitate that will strongly adhere to the bottom of the bowl.

Provision of the mulch composition 10 is preferably such that said mulch composition can further form a mulch ground cover. Aground cover for the soil substrate 20 (Fig. 1) is hereby provided, comprising the mulch composition 10 in the form of a surface cover layer distributed over said soil substrate 20. Upon being applied onto the soil substrate, the mulch composition 10 thus forms a uniform ground cover layer of a predetermined thickness (depth) that can be adjusted according to a variety of parameters including, but not limited to cultivated vegetation/-plants, soil type, landscape, intended use, environmental factors, and the like. It is preferred that the aforesaid ground cover is approximately 2 cm thick. For those skilled in the art it is clear that the ground covers, formed by spreading the mulch composition 10 over soil substrates 20, can be provided for the areas of practically any size, ranging from individual vegetable patches (e.g. 0,2 - 5 m²) to vast areas occupied by fields, recreation parks and forests (e.g. 10-100 km²). Formation of ground covers for areas of intermediate size (e.g. 100-5000 m²), such as for households, playgrounds etc., can be also advantageously realized.

Solidification of the mulch composition 10 and formation of the abovementioned ground cover occurs directly on-site (on open air), upon distributing the mulch composition over the soil substrate. On the contrary to sheet-like ground covers that could be successfully applied solely onto open flat surfaces, the ground cover of the present invention is applicable over a broken/rough terrain, over hillsides, below and under the bushes, etc.

Various uses of the mulch composition 10 are further provided. In one preferred embodiment the mulch composition 10 can be utilized to combat a variety of pests including, but not limited to: weeds, fungi, bacteria, insects, worms, caterpillars and the like, snails and slugs, as well as small rodents, such as rats, mice, voles, etc. Hereby use of the mulch composition 10 as a pesticide is provided, wherein the pesticide is selected from the group consisting of: herbicide, fungicide, bactericide, insecticide, insect growth regulator, nematocide, molluscicide, and rodenticide.

Pesticidal activities of the mulch composition 10 thus include, but are not limited to prevention and control of pest reproduction, growth and propagation; destroying; repelling; inhibiting/disrupting life cycle and/or egg-laying ability; and disinfecting.

Pesticidal activity of the mulch composition 10 is primarily imparted by the properties of pyrolysis oil 12 comprised thereto. For example, as mentioned hereinabove pyrolysis oil 12 comprises, as primary components, acetic acid and furfurals - the compounds with proved pesticidal activity. Furfural, for example, has been known as pesticide because of its nematicidal and antifungal activities.

Herbicidal (weed growth prevention- and control related) activity has been experimentally demonstrated by the mulch composition 10 in all instances. A prominent effect for various plants has been demonstrated with the mulch composition 10, in which amount of pyrolysis oil 12 has ranged within 2 to 25 percent by volume (vol.-%). Tests have been conducted using blueberry (*Vaccinium myrtillus*)*,* mountain sorrel (*Oxyria digyna*), nettle (*Urtica dioica*), greater plantain (*Plantago major*)*,* northern sweet grass (*Hierochloe hirta*) and roseroot (*Rhodiola rosea*)*.*

An effective amount of pyrolysis oil 12 in the composition 10, in terms of inducing an observable pesticidal effect thereby, is preferably experimentally adjusted for each plant type and/or an intended use of the composition 10 (e.g. in agriculture, horticulture, forestry, etc.). It has been generally shown that the lowest amount (about 2 vol.-%) of pyrolysis oil 12 is required for the mulch composition intended for use in vegetable patches; and the greatest (about 25 vol.-%) - for use in forestry.

Additionally, the mulch composition 10 has been experimentally shown to improve plant resistibility / durability against plant diseases.

The mulch composition 10 can be further used in reclamation and improvement of soil(s). Distribution of the mulch composition 10 over the soil substrate 20 within a site intended for treatment, such as a field, for example, enhances and/or deepens an existing organic matter containing soil layer, recovers and/or improves soil structure and stimulates activity of soil microorganisms' therewithin.

It is clear to a person skilled in the art that with the advancement of technology the basic ideas of the present invention are intended to cover various modifications included in the scope thereof. The invention and its embodiments are thus not limited to the examples described above; instead they may generally vary within the scope of the appended claims.

## Claims

1. A fluidic mulch composition (10) comprising:
- a fibrous peat material (11) in an amount of about 50 percent of the total volume occupied by the mulch composition,
- biomass-derived pyrolysis oil (12) in an amount ranging between 2 to 25 percent of the total volume occupied by the mulch composition, and
- water,
wherein biomass-derived pyrolysis oil (12) is an unfractionated liquid product obtainable from biomass feedstock by pyrolysis, and
wherein said mulch composition (10) is configured to solidify, upon being distributed over a soil substrate, to form a uniform surface cover layer of a predetermined depth.

2. The mulch composition (10) of claim 1, comprising the fibrous peat material (11), whose moisture content does not exceed 10 percent by weight.

3. The mulch composition (10) of claim 1, comprising the fibrous peat material (11) pre-saturated with water such, that moisture content therein is at least 50 percent by weight.

4. The mulch composition (10) of any preceding claim, further comprising an at least one additive (13) provided as biochar.

5. The mulch composition (10) of any preceding claim, further comprising bio-ash and/or potato flour.

6. A ground cover for a soil substrate (20), **characterized in that** said ground cover comprises the mulch composition (10) as defined in any of preceding claim in the form of a surface cover layer distributed over the soil substrate (20).

7. A method for producing a mulch composition (10) as defined in any one of claims 1-6, **characterized in that** said method comprises:
- combining a fibrous peat material (11) with water to obtain an aqueous peat suspension, followed by
- admixing biomass-derived pyrolysis oil (12) into said suspension.

8. The method of claim 7, further comprising admixing an at least one additive (13) with the fibrous peat material (11), prior to combining a resulted blend with water, wherein said at least one additive (13) is biochar.

9. The method of any one of claims 7 or 8, further comprising admixing bio-ash and/or potato flour with the fibrous peat material (11), prior to combining a resulting blend with water.

10. Use of the mulch composition (10) as defined in any of claims 1-6 as a pesticide.

11. Use according to claim 10, wherein the pesticide is selected from the group consisting of: herbicide, fungicide, bactericide, insecticide, insect growth regulator, nematocide, molluscicide, and rodenticide.

12. Use of the mulch composition (10) as defined in any of claims 1-6 in soil reclamation and improvement.

## Patentansprüche

1. Fluidische Mulchzusammensetzung (10), umfassend:
- ein faseriges Torfmaterial (11) in einer Menge von etwa 50 Prozent des durch die Mulchzusammensetzung eingenommenen Gesamtvolumens,
- von Biomasse stammendes Pyrolyseöl (12) in einer Menge im Bereich von 2 bis 25 Prozent des durch die Mulchzusammensetzung eingenommenen Gesamtvolumens, und
- Wasser,
wobei das von Biomasse stammende Pyrolyseöl (12) ein unfraktioniertes flüssiges Produkt ist, das aus Biomasse-Rohstoff durch Pyrolyse erhältlich ist, und
wobei die Mulchzusammensetzung (10) so ausgelegt ist, dass sie sich auf Verteilung über ein Erdsubstrat hin verfestigt, um eine gleichmäßige Oberflächenabdeckschicht von zuvor bestimmter Tiefe zu bilden.

2. Die Mulchzusammensetzung (10) nach Anspruch 1, umfassend das faserige Torfmaterial (11), wobei der Feuchtigkeitsgehalt 10 Gewichtsprozent nicht übersteigt.

3. Die Mulchzusammensetzung (10) nach Anspruch 1, umfassend das faserige Torfmaterial (11), das so mit Wasser vorgesättigt ist, dass der Feuchtigkeitsgehalt darin mindestens 50 Gewichtsprozent beträgt.

4. Die Mulchzusammensetzung (10) nach jedem vorangehenden Anspruch, weiterhin umfassend mindestens einen Zusatzstoff (13), bereitgestellt als Biokohle.

5. Die Mulchzusammensetzung (10) nach jedem vorangehenden Anspruch, weiterhin umfassend Bioasche und/oder Kartoffelmehl.

6. Bodenabdeckung für ein Erdsubstrat (20), **dadurch gekennzeichnet dass** die Bodenabdeckung die Mulchzusammensetzung (10), wie in jedem vorangegangenen Anspruch definiert, in Form einer Oberflächenabdeckungsschicht, verteilt über das Erdsubstrat (20), umfasst.

7. Verfahren zur Herstellung einer Mulchzusammensetzung (10), wie in jedem der Ansprüche 1-6 definiert, **dadurch gekennzeichnet dass** das Verfahren umfasst:
- Kombinieren eines faserigen Torfmaterials (11) mit Wasser, um eine wässrige Torfsuspension zu erhalten, gefolgt von
- Beimengen des von Biomasse stammenden Pyrolyseöls (12) zu dieser Suspension.

8. Das Verfahren nach Anspruch 7, weiterhin umfassend das Beimengen mindestens eines Zusatzstoffs (13) zu dem faserigen Torfmaterial (11), vor dem Kombinieren der resultierenden Mischung mit Wasser, wobei der mindestens eine Zusatzstoff (13) Biokohle ist.

9. Das Verfahren nach einem der Ansprüche 7 oder 8, weiterhin umfassend das Beimengen von Bioasche und/oder Kartoffelmehl zu dem faserigen Torfmaterial (11), vor dem Kombinieren der resultierenden Mischung mit Wasser.

10. Verwendung der Mulchzusammensetzung (10), wie in einem der Ansprüche 1-6 definiert, als ein Pestizid.

11. Verwendung gemäß Anspruch 10, wobei das Pestizid ausgewählt ist aus der Gruppe bestehend aus: Herbizid, Fungizid, Bakterizid, Insektizid, Insektenwachstumsregulator, Nematozid, Molluskizid und Rodentizid.

12. Verwendung der Mulchzusammensetzung (10), wie in jedem der Ansprüche 1-6 definiert, in der Bodenurbarmachung und -qualitätsverbesserung.

## Revendications

1. Composition de paillis fluide (10) comprenant :
- un matériau tourbeux fibreux (11) en une quantité d'environ 50 % du volume total occupé par la composition de paillis,
- une huile de pyrolyse dérivée de biomasse (12) en une quantité dans la plage de 2 à 25 % du volume total occupé par la composition de paillis, et
- de l'eau,
dans laquelle l'huile de pyrolyse dérivée de biomasse (12) est un produit liquide non fractionné pouvant être obtenu d'une charge de biomasse par pyrolyse, et
dans laquelle ladite composition de paillis (10) est configurée pour se solidifier, après avoir été distribuée sur un substrat de sol, pour former une couche uniforme de couverture de surface d'une profondeur prédéterminée.

2. Composition de paillis (10) selon la revendication 1, comprenant le matériau tourbeux fibreux (11), dont la teneur en eau ne dépasse pas 10 % en poids.

3. Composition de paillis (10) selon la revendication 1, comprenant le matériau tourbeux fibreux (11) pré-saturé avec de l'eau de telle sorte que sa teneur en eau soit d'au moins 50 % en poids.

4. Composition de paillis (10) selon une quelconque revendication précédente, comprenant en outre au moins un additif (13) fourni sous la forme de biocharbon.

5. Composition de paillis (10) selon une quelconque revendication précédente, comprenant en outre de la bio-cendre et/ou de la farine de pomme de terre.

6. Couverture de terre pour un substrat de sol (20), **caractérisé en ce que** ladite couverture de sol comprend la composition de paillis (10) selon une quelconque revendication précédente sous la forme d'une couche de couverture de surface distribuée sur le substrat de sol (20) .

7. Procédé de production d'une composition de paillis (10) selon l'une quelconque des revendications 1 à 6, **caractérisé en ce que** ledit procédé comprend :
- la combinaison d'un matériau tourbeux fibreux (11) avec de l'eau pour obtenir une suspension de tourbe aqueuse, suivie par
- le mélange d'huile de pyrolyse dérivée de biomasse (12) dans ladite suspension.

8. Procédé selon la revendication 7, comprenant en outre le mélange d'au moins un additif (13) avec le matériau tourbeux fibreux (11) avant la combinaison d'un mélange résultant avec de l'eau, dans lequel ledit au moins un additif (13) est du biocharbon.

9. Procédé selon l'une quelconque des revendications 7 ou 8, comprenant en outre le mélange de bio-cendre et/ou de farine de pomme de terre avec le matériau tourbeux fibreux (11), avant la combinaison d'un mélange résultant avec de l'eau.

10. Utilisation de la composition de paillis (10) selon l'une quelconque des revendications 1 à 6 en tant que pesticide.

11. Utilisation selon la revendication 10, dans laquelle le pesticide est sélectionné dans le groupe constitué par : un herbicide, un fongicide, un bactéricide, un insecticide, un régulateur de croissance des insectes, un nématocide, un molluscicide, et un rodenticide.

12. Utilisation de la composition de paillis (10) selon l'une quelconque des revendications 1 à 6 dans la réhabilitation et l'amélioration d'un sol.
